Europäisches Patentamt

European Patent Office

Office européen des brevets

(11) Veröffentlichungsnummer: **0 480 233 A2**

# EUROPÄISCHE PATENTANMELDUNG

(21) Anmeldenummer: **91116204.8**

(51) Int. Cl.5: **H04M 3/48**, H04M 3/42

(22) Anmeldetag: **24.09.91**

(30) Priorität: **08.10.90 DE 4031857**

(43) Veröffentlichungstag der Anmeldung:
**15.04.92 Patentblatt 92/16**

(84) Benannte Vertragsstaaten:
**AT BE CH DE ES FR GB IT LI NL SE**

(71) Anmelder: **Standard Elektrik Lorenz
Aktiengesellschaft
Lorenzstrasse 10
W-7000 Stuttgart 40(DE)**

(84) DE

(71) Anmelder: **ALCATEL N.V.
Strawinskylaan 341 (World Trade Center)
NL-1077 XX Amsterdam(NL)**

(84) **BE CH ES FR GB IT LI NL SE AT**

(72) Erfinder: **Dey, Wolfgang
Theodor-Heuss-Strasse 44
W-7147 Eberdingen-Hochdorf(DE)**

(74) Vertreter: **Pohl, Herbert, Dipl.-Ing et al
Standard Elektrik Lorenz AG Patent- und
Lizenzwesen Postfach 30 09 29
W-7000 Stuttgart 30(DE)**

(54) **Digitale Telekommunikationsanlage.**

(57) Beschrieben wird eine digitale Telekommunikationsanlage, mit einer zentralen Vermittlungsstelle (10) und mit mehreren Teilnehmerstellen (20a-20d), bei der die rufende Teilnehmerstelle (20a) ein Anrufsignal an die Vermittlungsstelle (10) sendet, welches die Kennnummer der gerufenen Teilnehmerstelle (20b) enthält, und bei der die zentrale Vermittlungsstelle (10) die Kennummer der rufenden ersten Teilnehmerstelle (20a) erfaßt. Erfindungsgemäß ist vorgesehen, daß die zentrale Vermittlungsstelle (10) einen Rückruf-Speicher mit mehreren je einer Teilnehmerstelle zugeordneten Speicherplätzen (11a-11d) aufweist, in denen jeweils die Kennummer einer Teilnehmerstelle (20a-20d) der digitalen Telekommunikationsanlage abspeicherbar ist, daß die zweite Teilnehmerstelle (20b) eine Rückruf-Funktionstaste (21) aufweist, durch deren Betätigung nach dem Auslösen der Verbindung zwischen der ersten (20a) und der zweiten Teilnehmerstelle (20b) ein Rückruf-Signal erzeugt wird, welches bewirkt, daß die in dem der zweiten Teilnehmerstelle (20b) zugeordneten Speicherplatz (11b) des Rückruf-Speichers (11) abgelegte Kennummer der rufenden ersten Teilnehmerstelle (20a) ausgelesen wird, und daß die aus dem Rückruf-Speicher (11) ausgelesene Kennummer der ersten Teilnehmerstelle (20a) als Anrufzielnummer für den Rückruf der ersten Teilnehmerstelle (20a) verwendet wird.

Die Erfindung betrifft eine digitale Telekommunikationsanlage, mit einer zentralen Vermittlungsstelle und mit mehreren Teilnehmerstellen, bei der eine rufende erste Teilnehmerstelle ein Anrufsignal an die Vermittlungsstelle sendet, welches die Kennummer der gerufenen zweiten Teilnehmerstelle enthält, und bei der die zentrale Vermittlungsstelle die Kennummer der ersten Teilnehmerstelle erfaßt.

Eine derartige digitale Telekommunikationsanlage ist bekannt. Ein gravierender Nachteil derartiger digitaler Telekommunikationsanlagen, der den Bedienungskomfort negativ beeinflußt, ist aus der folgenden Beschreibung einer im alltäglichen Gebrauch häufig wiederkehrenden Situation klar ersichtlich: Ein erster Teilnehmer ruft von einer ersten Teilnehmerstelle A einen zweiten Teilnehmer an einer zweiten Teilnehmerstelle B an. Aus dem Inhalt des Gespräches ist es dem zweiten Teilnehmer normalerweise leicht möglich, die Person des anrufenden ersten Teilnehmers zu identifizieren. Es ist ihm jedoch nicht möglich festzustellen, welche erste Teilnehmerstelle A der anrufende erste Teilnehmer tatsächlich benützt, d.h., ob der erste Teilnehmer von seiner eigenen Teilnehmerstelle oder von einer fremden Teilnehmerstelle aus anruft. Dies ist insbesondere dann von Nachteil, wenn - nach Beendigung des Gesprächs - der erste Teilnehmer den zweiten Teilnehmer spontan zurückrufen möchte, um eine im nachhinein aufgetretene Frage zu erläutern oder dem ersten Teilnehmer einen unerwarteten Geistesblitz mitzuteilen. Es ist jedoch für den zweiten Teilnehmer fast nicht oder nur mit großem Aufwand möglich, den ersten Teilnehmer erneut zu erreichen, wenn die Teilnehmerstelle A - von der der erste Teilnehmer angerufen hat - nicht dessen eigene Teilnehmerstelle ist, sondern eine beliebige andere Teilnehmerstelle der digitalen Telekommunikationsanlage.

Zur Vermeidung dieses Nachteils stellt sich die Erfindung die **Aufgabe,** eine digitale Telekommunikationsanlage der eingangs genannten Art derart weiterzuentwickeln, daß in besonders einfacher Art und Weise ein Rückruf des anrufenden Teilnehmers ermöglicht wird.

Diese Aufgabe wird erfindungsgemäß dadurch **gelöst,** daß die zentrale Vermittlungsstelle einen Rückruf-Speicher mit mehreren je einer Teilnehmerstelle zugeordneten Speicherplätzen aufweist, in denen jeweils die Kennummer einer Teilnehmerstelle der digitalen Telekommunikationsanlage abspeicherbar ist, und daß nach dem Aufbau einer Verbindung zwischen der ersten Teilnehmerstelle und der zweiten Teilnehmerstelle die Kennummer der rufenden ersten Teilnehmerstelle in dem der zweiten Teilnehmerstelle zugeordneten Speicherplatz des Rückruf-Speichers abgespeichert wird, und daß die zweite Teilnehmerstelle eine Rückruf-Funktionstaste aufweist, durch deren Betätigung nach dem Auslösen der Verbindung zwischen der ersten und der zweiten Teilnehmerstelle ein Rückruf-Signal erzeugt wird, welches bewirkt, daß die in dem Speicherplatz des Rückrufspeichers abgelegte Kennummer der rufenden ersten Teilnehmerstelle ausgelesen wird, und daß die aus dem Rückruf-Speicher ausgelesene Kennummer der ersten Teilnehmerstelle als Anrufzielnummer für den Rückruf der ersten Teilnehmerstelle verwendet wird.

Durch die erfindungsgemäßen Maßnahmen wird in besonders einfacher Art und Weise eine digitale Telekommunikationsanlage geschaffen, die sich durch ihre besonders hohe Alltagstauglichkeit auszeichnet. Der in der zentralen Vermittlungsstelle angeordnete Rückruf-Speicher erlaubt es dem angerufenen Teilnehmer durch einen einfachen Tastendruck, den anrufenden Teilnehmer auch dann zu erreichen, wenn letzterer nicht von seiner eigenen Teilnehmerstelle, sondern von einer fremden Teilnehmerstelle das eben beendete Gespräch geführt hat. Ein derartiges Leistungsmerkmal erhöht in besonders vorteilhafter Art und Weise den Bedienungskomfort und die Einsatzmöglichkeiten der digitalen Telekommunikationsanlage beträchtlich.

Vorteilhafte Weiterbildungen der Erfindung sind den Unteransprüchen zu entnehmen.

Weitere Einzelheiten der Erfindung sind aus dem Ausführungsbeispiel ersichtlich, welches im folgenden anhand der Zeichnungen beschrieben wird. Es zeigt:

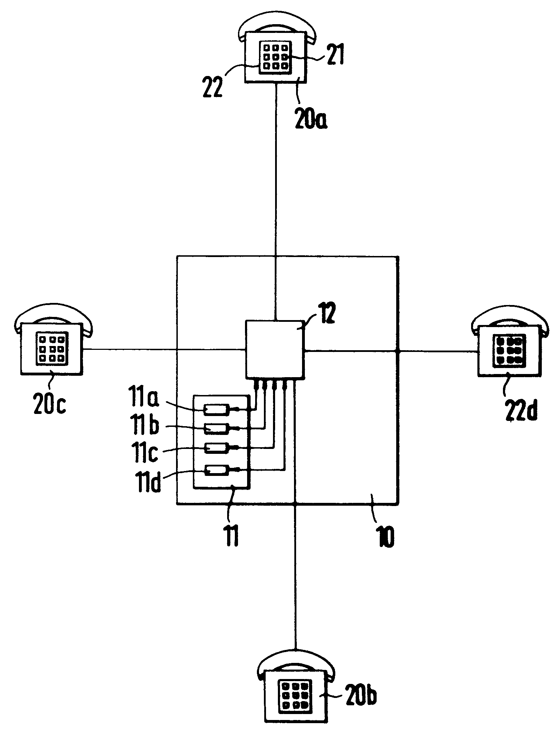

Figur 1    eine schematische Darstellung einer digitalen Telekommunikationsanlage gemäß der Erfindung.

Die in Figur 1 dargestellte digitale Telekommunikationsanlage weist eine zentrale Vermittlungsstelle 10 auf, mit der mehrere Teilnehmerstellen 20a, 20b, 20c und 20d verbunden sind. Die zentrale Vermittlungsstelle 10 weist eine bekannte und daher nicht näher beschriebene Steuereinrichtung 12 auf, welche alle zur Verbindung zweier Teilnehmerstellen erforderlichen Prozeßabläufe in der zentralen Vermittlungsstelle 10 steuert. Jede Teilnehmerstelle 20a-20d sendet - nachdem sie durch geeignete Maßnahmen, z.B. Abheben des Hörers und Wählen der Kennummer der gewünschten anderen Teilnehmerstelle aktiviert wurde - ein Anrufsignal an die zentrale Vermittlungsstelle 10, welches die Kennummer der gerufenen Teilnehmerstelle enthält.

Die Steuereinrichtung 12 der zentralen Vermittlungsstelle wertet das Anrufsignal aus und stellt dann in bekannter Art und Weise zwischen der rufenden und der gerufenen Teilnehmerstelle eine Leitungsverbindung her.

Der Aufbau und die Funktionsweise einer derartigen digitalen Telekommunikationsanlage sind dem Fachmann bekann. Eine weitergehende, detailliertere Beschreibung erübrigt sich daher an dieser Stelle.

Wichtig ist nun, daß die zentrale Vermittlungsstelle 10 einen Rückruf-Speicher 11 aufweist, welcher in einem Datenaustausch mit der Steuereinrichtung 12 der zentralen Vermittlungsstelle 10 steht. Der Rückruf-Speicher 11 weist eine Anzahl von Speicherplätzen 11a-11d auf, deren Anzahl der Zahl der Teilnehmerstellen 20a-20d entspricht, für welche das Rückruf-Leistungsmerkmal vorgesehen sein soll. Die einzelnen Speicherplätze 11a-11d des Rückruf-Speichers 11 sind dabei derart dimensioniert, daß mindestens eine Kennummer einer Teilnehmerstelle vollständig darin abspeicherbar ist. Das Einschreiben bzw. Auslesen der Kennummer einer Teilnehmerstelle 20a-20d der digitalen Telekommunikationsanlage wird dabei von der Steuereinrichtung 12 gesteuert.

Die Funktionsweise der digitalen Telekommunikationsanlage ist wie folgt: Bei der nachfolgenden Beschreibung wird beispielhafterweise angenommen, daß eine Verbindung zwischen der - rufenden - ersten Teilnehmerstelle 20a und der - gerufenen - zweiten Teilnehmersteller 20b hergestellt werden soll.

Nach dem Abheben des Hörers und dem Wählen der gewünschten Rufnummer - der Kennummer der zweiten Teilnehmerstelle 20b - sendet die erste Teilnehmerstelle 20a - wie bereits beschrieben - das Anrufsignal an die zentrale Vermittlungsstelle 10. Die erste Teilnehmerstelle 20a ist dabei entweder eine Teilnehmerstelle einer nach außen hin abgeschlossenen digitalen Telekommunikationsanlage - wie z.B. ein Apparat eines firmeninternen Telefonsystems - oder eine amtsberechtigte Teilnehmerstelle, die an eine öffentliche ISDN (Integrated Service Digital Network)-Vermittlungsstelle angeschlossen ist. Diese beiden Fälle unterscheiden sich lediglich darin, daß die Kennummer der rufenden ersten Teilnehmerstelle 20a unterschiedlich ermittelt wird: Im ersten Fall sind die Kennummern der Teilnehmerstellen 20a-20d in der zentralen Vermittlungsstelle 10 abgespeichert. Die Identifikation - und somit die Erfassung der Kennummer - der rufenden ersten Teilnehmerstelle 20a erfolgt dabei in an sich bekannter Art und Weise über eine in der Steuereinrichtung 12 festgelegten Verknüpfung zwischen einer bestimmten Kennummer und der Leitungsverbindung, über welche das Anrufsignal von der rufenden ersten Teilnehmerstelle 20a zur zentralen Vermittlungsstelle 10 gelangt. Im Falle einer ISDN-Vermittlungsstelle als rufende erste Teilnehmerstelle 20a ist deren Kennummer im Anrufsignal enthalten, so daß diese Teilnehmerstelle durch eine entsprechende Auswertung des Anrufsignals durch die Steuereinrichtung 12 identifizierbar ist. Wichtig hierbei ist nur, daß die rufende Teilnehmerstelle ein Anrufsignal erzeugt und an die zentrale Vermittlungsstelle 10 leitet, welches der zentralen Vermittlungsstelle 10 eine Identifikation der rufenden, also der ersten Teilnehmerstelle 20a und somit eine Erfassung deren Kennummer ermöglicht.

Die zentrale Vermittlungsstelle 10 stellt in an sich bekannter Art und Weise eine Verbindung mit der zweiten Teilnehmerstelle 20b her. Nachdem der zweite Teilnehmer an der zweiten Teilnehmerstelle 20b das Gespräch angenommen hat, wird von dieser ein Rückmelde-Signal erzeugt und zur zentralen Vermittlungsstelle 10 geleitet. Das zu der Steuereinrichtung 12 der zentralen Vermittlungsstelle 10 geleitete Rückmelde-Signal bewirkt, daß die Kennummer der ersten Teilnehmerstelle 20a in dem der zweiten Teilnehmerstelle 20b zugeordneten Speicherplatz 11b des Rückruf-Speichers 11 abgespeichert wird. Nach der Beendigung des Gespräches zwischen dem ersten und dem zweiten Teilnehmer bleibt die Kennummer der ersten Teilnehmerstelle 20a im Rückruf-Speicher 11 der Vermittlungsstation 10 gespeichert.

Wünscht der zweite Teilnehmer den ersten Teilnehmer zurückzurufen, so kann dies besonders vorteilhaft ohne großen Aufwand erfolgen: Der Rückruf des letzten Gesprächpartners des zweiten Teilnehmers - also des ersten Teilnehmers - erfordert es lediglich, eine spezielle Funktionstaste 21 eines Tastenfeldes 22 der zweiten Teilnehmerstelle 20b zu drücken. Es ist aber auch möglich, daß der Rückruf des ersten Teilnehmers durch das Eintasten einer speziellen Tastenkombination des Tastenfeldes 22 oder - falls die Teilnehmerstelle 20a-20d als Wählscheiben-Apparat ausgebildet ist - durch eine Abfolge von Wählvorgängen einer Wählscheibe den Rückruf zu initiieren. Die zweite Teilnehmerstelle 20b sendet daraufhin ein Rückruf-Signal zur Vermittlungsstelle 10, welches bewirkt, daß der Rückruf-Speicher 11 ausgelesen und die im Speicherplatz 11b gespeicherte Kennummer der ersten Teilnehmerstelle 20b als Anrufzielnummer benutzt wird. Die zentrale Vermittlungsstelle 10 stellt dann in an sich bekannter Art und Weise unter Verwendung der im Rückruf-Speicher 11 gespeicherten Kennummer die Verbindung mit der ersten Teilnehmerstelle 20a her.

Zusammenfassend ist festzustellen, daß die Rückruf-Einrichtung der digitalen Telekommunikationsanlage ein äußerst effizientes Leistungsmerkmal darstellt, welches den Bedienungskomfort und die Einsatzmöglichkeiten einer derartigen Telekommunikationseinrichtung drastisch erhöht.

**Patentansprüche**

1.  Digitale Telekommunikationsanlage, mit einer zentralen Vermittlungsstelle (10) und mit mehreren Teilnehmerstellen (20a-20d), bei der eine rufende erste Teilnehmerstelle (20a) ein Anrufsignal an die Vermittlungsstelle (10) sendet, welches die Kennummer der gerufenen zweiten Teilnehmerstelle (20b) enthält, und bei der die zentrale Vermittlungsstelle (10) die Kennummer der rufenden ersten Teilnehmerstelle (20a) erfaßt, **dadurch gekennzeichnet**, daß die zentrale Vermittlungsstelle (10) einen Rückruf-Speicher (11) mit mehreren je einer Teilnehmerstelle (20a-20d) zugeordneten Speicherplätzen (11a-11d) aufweist, in denen jeweils die Kennummer einer Teilnehmerstelle (20a-20d) der digitalen Telekommunikationsanlage abspeicherbar ist, und daß nach dem Aufbau einer Verbindung zwischen der ersten Teilnehmerstelle (20a) und der zweiten Teilnehmerstelle (20b) die Kennummer der rufenden ersten Teilnehmerstelle (20a) in dem der zweiten Teilnehmerstelle (20b) zugeordneten Speicherplatz (11b) des Rückruf-Speichers (11) abgespeichert wird, und daß die zweite Teilnehmerstelle (20b) eine Rückruf-Funktionstaste (21) aufweist, durch deren Betätigung nach dem Auslösen der Verbindung zwischen der ersten (20a) und der zweiten Teilnehmerstelle (20b) ein Rückruf-Signal erzeugt wird, welches bewirkt, daß die in dem Speicherplatz (11b) des Rückruf-Speichers (11) abgelegte Kennummer der rufenden ersten Teilnehmerstelle (20a) ausgelesen wird, und daß die aus dem Rückruf-Speicher (11) ausgelesene Kennummer der ersten Teilnehmerstelle (20a) als Anrufzielnummer für den Rückruf der ersten Teilnehmerstelle (20a) verwendet wird.

2. Digitale Telekommunikationsanlage nach Anspruch 1, dadurch gekennzeichnet, daß die erste Teilnehmerstelle (20a) Bestandteil eines abgeschlossenen Telekommunikationssystems ist, bei dem die Kennunmmer der ersten Teilnehmerstelle (20a) in der zentralen Vermittlungsstelle (10) abgespeichert ist.

3. Digitale Telekommunikationsanlage nach Anspruch 1, dadurch gekennzeichnet, daß die erste Teilnehmerstelle (20a) eine über eine öffentliche ISDN-Vermittlungsstelle verbundene Teilnehmerstelle ist, und daß das von der ersten Teilnehmerstelle (20a) ausgesendete Anrufsignal die Kennummer der rufenden ersten Teilnehmerstelle (20a) enthält.

4. Digitale Telekommunikationsanlage nach Anspruch 1, dadurch gekennzeichnet, daß die Rückruf-Funktionstaste (21) der zweiten Teilnehmerstelle (20b) durch eine spezielle Funktionstaste eines Tastenfeldes (22) gebildet wird.

5. Digitale Telekommunikationsanlage nach Anspruch 1, dadurch gekennzeichnet, daß die Rückruf-Funktionstaste (21) der zweiten Teilnehmerstelle (20b) durch eine Abfolge von Tasten des Tastenfeldes (22) gebildet wird.

6. Digitale Telekommunikationsanlage nach Anspruch 1, dadurch gekennzeichnet, daß die Rückruf-Funktionstaste (21) der zweiten Teilnehmerstelle (20b) durch eine Abfolge von Wählbewegungen einer Wählscheibe gebildet wird.